# DEMANDE DE BREVET EUROPEEN

(11) **EP 1 820 665 A2**
(43) Date de publication de la demande: **22.08.2007**
(21) Numéro de dépôt: 07003190.1
(22) Date de dépôt: 15.02.2007
(51) Int. Cl.: B60B 7/00

(54) **Dispositif de fixation d'un enjoliveur sur la jante d'une roue d'un véhicule automobile**

(30) Priorité: 15.02.2006 FR 0601330
(71) Demandeur: Metalplast S.A.S., 75017 Paris (FR)
(72) Inventeur: Dezarnaud, Michel, 92200 Neuilly sur Seine (FR)
(74) Mandataire: Maillet, Alain

(57) **Abrégé**

La présente invention concerne un dispositif de fixation (100) d'un enjoliveur (O) sur une jante (J) d'un véhicule automobile, le dispositif de fixation (100) comprenant un anneau de retenue (120) destiné à être solidarisé sur la jante (J) par des goujons (G) de fixation de ladite jante sur un moyeu (M) du véhicule automobile.

Selon l'invention, le dispositif de fixation (100) comporte en outre un manchon (140) prévu pour être fixé sur l'anneau de retenue (120), ainsi qu'une bague tournante (160) destinée à être montée dans un logement central (O1) dont est pourvu l'enjoliveur (O), de manière à ce que la fixation de l'enjoliveur (O) sur ladite jante (J) puisse être réalisée par vissage de la bague tournante (160) autour ou dans ledit manchon (140).

Par cette construction on peut adapter un enjoliveur sur des jantes de profondeurs différentes en utilisant le dispositif de fixation de l'invention dont seul le manchon, de longueur prédéfinie, est choisi dans une gamme restreinte de manchons.

## Description

La présente invention concerne un dispositif de fixation d'un enjoliveur sur la jante d'une roue d'un véhicule automobile.

Il peut être avantageux de proposer à la vente des enjoliveurs susceptibles de prendre place sur les jantes de véhicules automobiles qui en sont dépourvus ou tout simplement pour remplacer ceux qui y sont posés d'origine.

Pour adapter un tel enjoliveur sur la jante, on utilise bien souvent le même type de dispositif d'assemblage que celui prévu à l'origine. Il existe en effet des enjoliveurs adaptables pourvus à leur périphérie d'un anneau métallique élastique apte à être clippé dans la bordure périphérique de la jante. On trouve encore des enjoliveurs percés en leur partie centrale d'un trou dans lequel est enfilée une vis qu'il convient de visser dans un écrou fixé sur une patte ou sur un bossage prévu sur la partie centrale de la jante.

La patte de fixation est parfois remplacée par une coiffe amovible. Celle-ci présente, par exemple, la forme d'un chapeau comprenant un rebord extérieur circulaire, une portion cylindrique et un fond plat percé d'un alésage taraudé ou pourvu d'un écrou de fixation. Des orifices sont réalisés sur le rebord extérieur pour permettre sa fixation sur la jante ainsi que sur le moyeu, par l'intermédiaire de goujons de fixation de la jante sur le moyeu de la roue du véhicule.

Les jantes des véhicules ayant des profils différents, ces solutions imposent de proposer une grande variété d'enjoliveurs pour couvrir la majorité des utilisations.

Aussi le but de l'invention est donc de proposer un dispositif de fixation d'un enjoliveur sur la jante d'une roue d'un véhicule automobile qui puisse réduire le nombre de types d'enjoliveurs tout en permettant leur adaptation sur la plus grande variété possible de véhicules.

A cet effet, est proposé un dispositif de fixation d'un enjoliveur sur une jante d'un véhicule automobile, le dispositif de fixation comprenant un anneau de retenue destiné à être solidarisé sur la jante par des goujons de fixation de ladite jante sur un moyeu du véhicule automobile, le dispositif de fixation étant remarquable en ce qu'il comporte en outre un manchon prévu pour être fixé sur l'anneau de retenue, ainsi qu'une bague tournante destinée à être montée dans un logement central dont est pourvu l'enjoliveur, de manière à ce que la fixation de l'enjoliveur sur ladite jante puisse être réalisée par vissage de la bague tournante autour ou dans ledit manchon.

Par cette construction on peut adapter un enjoliveur sur des jantes de profondeurs différentes en utilisant un anneau de retenu, une bague tournante standards ainsi qu'un manchon d'une longueur prédéfinie choisi dans une gamme restreinte de manchons.

Selon une caractéristique additionnelle de l'invention, le manchon est pourvu d'un filetage et la bague tournante est pourvue d'un taraudage prévus pour coopérer ensemble.

La bague tournante se comporte ainsi comme un écrou que l'on vient assembler par vissage autour du manchon.

Selon une caractéristique additionnelle de l'invention, l'anneau de retenue est constitué d'une couronne délimitant un passage central cylindrique, et le manchon est constitué d'une paroi cylindrique prévue pour être montée dans le passage central cylindrique, ladite paroi cylindrique étant pourvue à une extrémité du filetage et étant pourvue à son autre extrémité d'une collerette destinée à être mise en butée sur ledit anneau en étant placée entre la jante et ledit anneau.

Le manchon est ainsi tenu par sa collerette qui est pincée entre l'anneau de retenue et la jante lors du serrage des goujons.

Selon une caractéristique additionnelle de l'invention, l'anneau de retenue et le manchon sont pourvus d'un moyen de blocage en rotation permettant d'interdire tout mouvement de rotation du manchon dans l'anneau de retenue à l'issue de leur assemblage.

Avantageusement, le moyen de blocage en rotation est constitué d'au moins un tenon coopérant respectivement avec au moins une rainure.

Selon une caractéristique additionnelle de l'invention, l'anneau de retenue et le manchon sont pourvus d'un moyen de blocage en translation permettant de bloquer tout mouvement en translation du manchon dans l'anneau de retenue, à l'issue de leur assemblage.

Avantageusement, le moyen de blocage en translation est constitué d'au moins un cran agencé de manière élastique dans la paroi cylindrique du manchon en étant apte à coopérer avec la face externe de la couronne de l'anneau de retenue.

Selon une caractéristique additionnelle de l'invention, la couronne est pourvue d'orifices permettant le montage des goujons.

Selon une caractéristique additionnelle de l'invention, les orifices sont constitués de quatre trous et deux rainures oblongues aménagés de manière à permettre le montage de l'anneau de retenue sur des moyeux de type à quatre goujons ou de type à cinq goujons.

Selon une caractéristique additionnelle de l'invention, des doigts élastiques sont prévus au travers de la couronne.

Selon une caractéristique additionnelle de l'invention, la bague tournante est constituée d'une bague prévue pour être montée libre à rotation dans le logement central de l'enjoliveur et dont une extrémité comporte un épaulement destiné à former une butée sur la paroi extérieure de l'enjoliveur, la bague comportant intérieurement le taraudage adapté à coopérer avec le filetage du manchon.

Selon une caractéristique additionnelle de l'invention, le dispositif de fixation comprend une clef de manoeuvre de la bague tournante ainsi qu'un cabochon d'obturation, la clef de manoeuvre est pourvue de doigts et le cabochon d'obturation est pourvu de languettes, des empreintes étant réalisées en protubérance dans la paroi intérieure de la bague tournante pour coopérer avec les doigts de la clef de manoeuvre afin de pouvoir être entraînée en rotation par elle et dont les parois arrières sont adaptées à coopérer avec les languettes du cabochon pour le verrouiller.

Selon une caractéristique additionnelle de l'invention, le manchon et la bague tournante sont pourvus respectivement d'encoches, l'enjoliveur étant pourvu de crantages réalisés dans une bordure périphérique ceinturant le logement central de l'enjoliveur, le cabochon étant pourvu, d'une part, de crantages aptes à coopérer avec ceux de l'enjoliveur et, d'autre part, de tenons aptes être placés dans les encoches du manchon et de la bague tournante pour bloquer en rotation l'enjoliveur sur la jante à l'issue du verrouillage du cabochon.

Le manchon, la bague tournante et l'enjoliveur sont ainsi rendus solidaires mutuellement

Selon une caractéristique additionnelle de l'invention des fentes sont réalisées au travers du cabochon en étant disposées de manière à ce que les doigts de la clef de manoeuvre puissent pénétrer au travers afin de déformer les languettes pour faciliter le retrait du cabochon de dessus la bague tournante.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue éclatée en perspective d'une jante d'un véhicule automobile ainsi qu'un enjoliveur et son dispositif de fixation selon l'invention,
la Fig. 2 représente une vue éclatée en coupe d'une jante montée sur un moyeu d'un véhicule automobile et d'un enjoliveur et son dispositif de fixation selon l'invention,
la Fig. 3a représente une vue de face d'un anneau de retenue constitutif d'un dispositif de fixation d'un enjoliveur sur une jante selon l'invention,
la Fig. 3b représente une vue de côté d'un anneau de retenue constitutif d'un dispositif de fixation d'un enjoliveur sur une jante selon l'invention,
la Fig. 3c représente une vue de face d'un anneau de retenue monté sur un moyeu comportant quatre goujons selon l'invention et,
la Fig. 3d représente une vue de face d'un anneau de retenue monté sur un moyeu comportant cinq goujons selon l'invention.

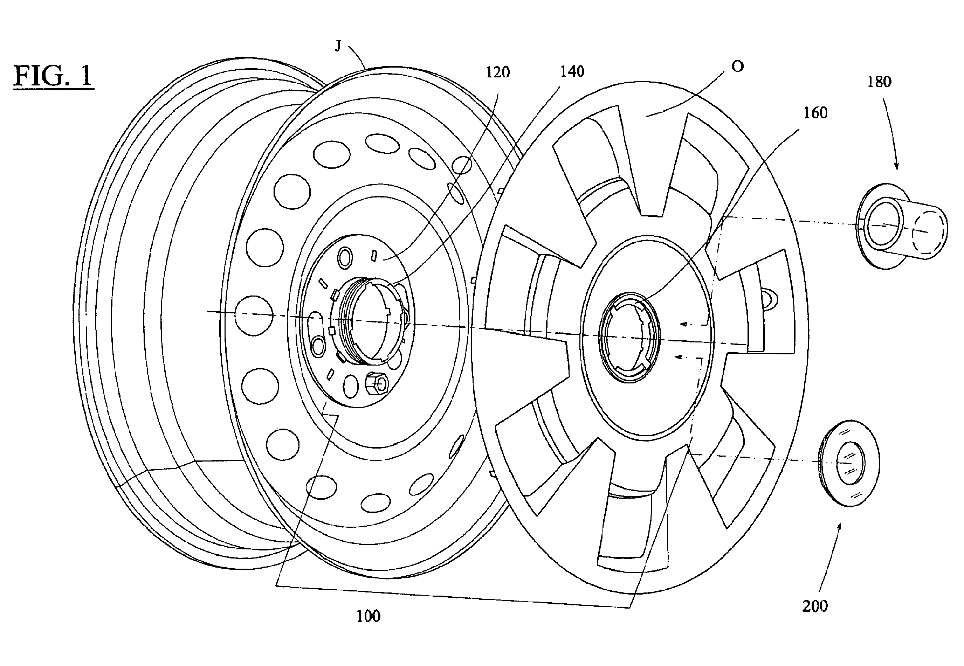

On a représenté à la Fig. 1 une jante J, un enjoliveur O et son dispositif de fixation 100 sur ladite jante.

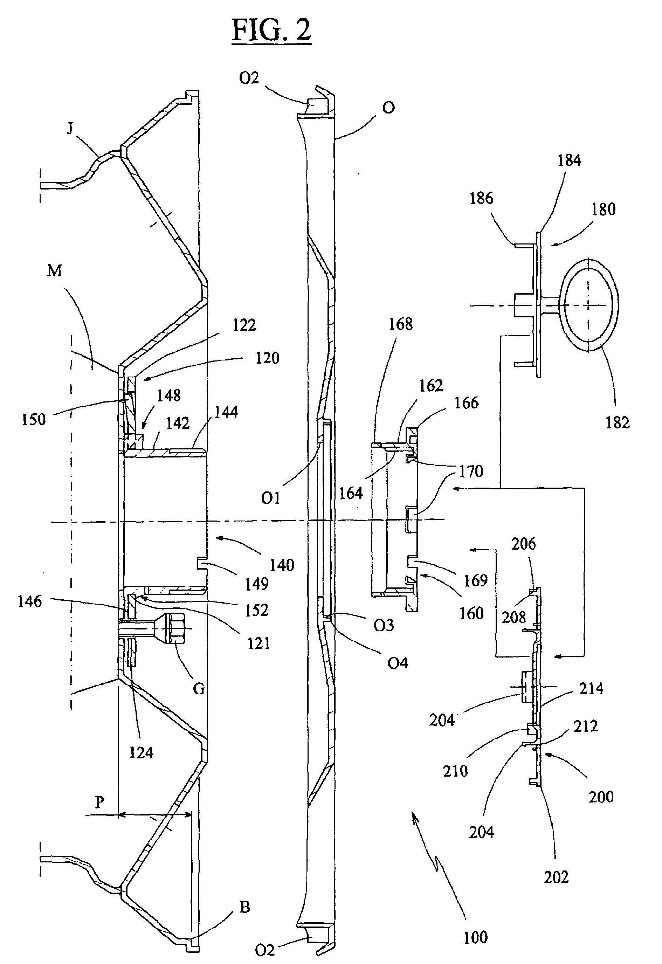

Ce dispositif de fixation 100 comprend principalement un anneau 120 de retenue destiné à être placé sur la jante J en étant fixé sur un moyeu M de roue (visible uniquement à la Fig. 2), un manchon 140 prévu pour être assemblé sur ledit anneau pour tenir l'enjoliveur O ainsi qu'une bague tournante 160 montée sur l'enjoliveur O pour le fixer sur ledit manchon. Une clef de manoeuvre 180 de la bague tournante 160 ainsi qu'un cabochon 200 complètent le dispositif de fixation 100.

A la Fig. 2, la jante J est fixée par sa partie centrale sur le moyeu M par l'intermédiaire de goujons G et de l'anneau 120 de retenue. Plus précisément, la jante J est interposée entre le moyeu M et ledit anneau 120 de manière à ce que le vissage des goujons G dans le moyeu M puisse appliquer ledit anneau sur la jante J afin de la bloquer sur le moyeu M.

L'anneau 120 de retenue est constitué à cet effet d'une couronne 122 ceinturant un passage central cylindrique 121 au travers duquel est monté le manchon 140. Des orifices 124 traversent la couronne 122 permettant le montage des goujons G.

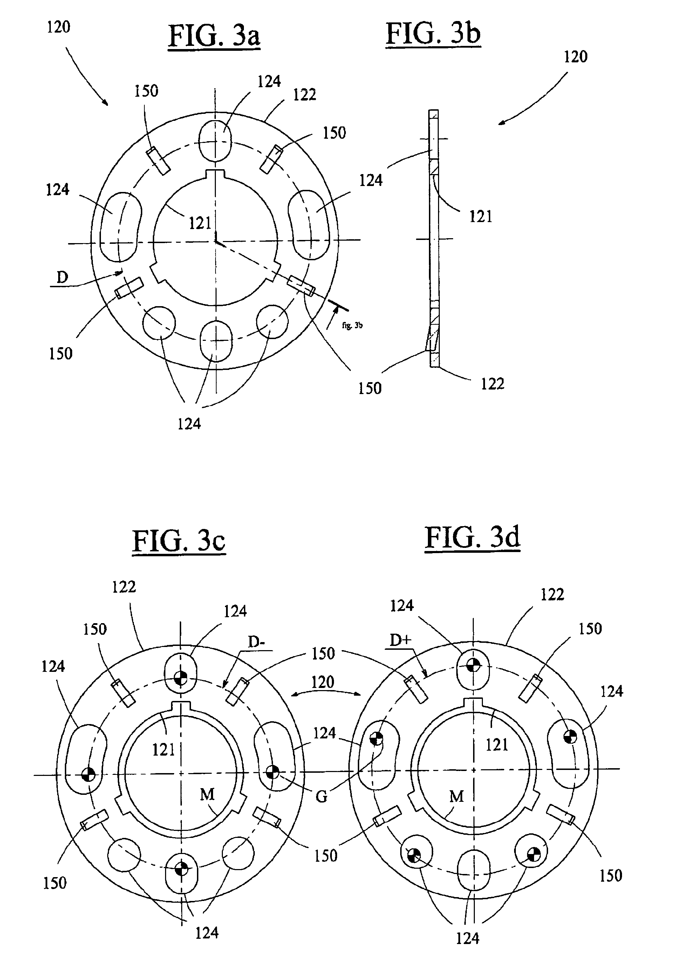

Aux Fig. 3, les orifices 124 sont constitués de trous et de rainures oblongues disposés sur un même diamètre D et sont répartis de manière à permettre son montage sur des moyeux M pourvus de quatre goujons G (Fig. 3c) ou pourvus de cinq goujons G (Fig. 3d) répartis de manière équidistante d'un point de vue angulaire autour de l'axe de rotation du moyeu M. Les goujons G sont symbolisés à ces Fig. 3c et 3d par des cercles partiellement hachurés. Cette conception particulière rend compatible le montage de l'anneau de retenue avec la majorité des moyeux des véhicules automobiles. Les dimensions des trous et des rainures sont également adaptées pour que l'anneau de retenue 120 puisse être placé sur des goujons G disposés sur des diamètres D- et D+ légèrement différents comme cela apparaît à ces Figs. 3c et 3d.

A la Fig. 3a, quatre trous et deux rainures oblongues traversent la couronne 122. A cette même Fig. 3a, trois de ces trous sont voisins et l'anneau de retenue 120 est symétrique dans un plan passant par son axe de révolution et l'axe du trou central.

Aux Figs. 1 et 2, l'anneau de retenue 120 sert également de support au manchon 140 qui est destiné à permettre la fixation, en coopération avec la bague tournante 160, de l'enjoliveur O sur la jante J.

A la Fig. 2, le manchon 140 est monté dans la partie centrale de l'anneau de retenue 120. Le manchon 140 est constitué à cet effet d'une paroi cylindrique 142 pourvue à une extrémité d'un filetage 144 et dont l'autre extrémité est pourvue d'une collerette 146 destinée à être mise en butée sur ledit anneau 120.

Le manchon 140 est monté de telle sorte que sa paroi cylindrique 142 soit logée dans le passage central cylindrique 121 de l'anneau de retenue 120 et que sa collerette 146 soit pincée entre la jante J et l'anneau de retenue 120 comme cela apparaît à cette Fig. 2.

Un moyen de blocage en rotation 148 tel qu'au moins un tenon coopérant respectivement avec au moins une rainure permet d'interdire tout mouvement de rotation du manchon 140 dans l'anneau de retenue 120 à l'issue de leur assemblage. A cette Fig. 2, le tenon visible est disposé sur le manchon 140 et la rainure visible est prévue dans l'anneau de retenue 120. Ils pourraient être inversés dans une variante de réalisation non représentée. Dans un mode de réalisation avantageux, trois tenons coopèrent avec trois rainures. De telles rainures sont visibles aux Figs. 3a à 3d.

A la Fig. 2, des doigts élastiques 150 sont prévus dans la couronne 122 pour appliquer, en complément de la collerette 146, la jante J sur le moyeu M lors du serrage des goujons G. A cet effet, l'anneau de retenue 120 est positionné de manière à ce que les doigts élastiques 150 soient tournés vers la jante J comme cela apparaît à cette Fig. 2 La totalité des doigts élastiques 150 sont visibles aux Figs. 3a, 3c et 3d. Quatre doigts apparaissent sur chacune de ces Figs.

A la Fig. 2, un moyen de blocage en translation 152, tel qu'au moins un cran agencé de manière élastique dans la paroi cylindrique 142 en étant apte à coopérer avec la face externe de la couronne 122, c'est-à-dire celle qui est tournée vers l'extérieur, permet de bloquer tout mouvement en translation du manchon 140 dans l'anneau de retenue 120, à l'issue de leur assemblage. Dans un mode de réalisation préféré, quatre crans sont réalisés dans la paroi cylindrique 142.

Par cette construction amovible du manchon 140, on peut ainsi le remplacer à moindre frais par un autre dont la longueur, différente, est adaptée à une jante dont la profondeur P est différente. Par profondeur, il faut comprendre la distance P séparant la paroi de la jante qui est en contact avec le moyeu M et la bordure périphérique B de ladite jante sur laquelle prend appui l'enjoliveur O à l'issue de son montage. Dans la pratique, trois types de manchons, se distinguant par des longueurs différentes, conviennent pour monter des enjoliveurs sur la majorité des véhicules automobiles.

La bague tournante 160 est destinée à être montée de manière libre à rotation dans un logement central O1 prévu dans l'enjoliveur O pour le fixer par vissage sur le manchon 140 afin que ledit enjoliveur O puisse être plaqué, par l'intermédiaire d'ergots 02 prévus à sa périphérie, sur la bordure périphérique B de la jante J.

La bague tournante 160 est constituée d'une bague 162 dont une extrémité comporte un épaulement 166 formant une butée sur la paroi extérieure de l'enjoliveur O. La bague 162 comporte intérieurement un taraudage 164 adapté à coopérer avec le filetage 144 du manchon 140. L'autre extrémité de la bague 162 est pourvue d'au moins un arrêtoir 168, constitué d'un cran monté de manière élastique, destiné à le rendre solidaire de l'enjoliveur O à l'issue de son montage dans le logement central O1.

Des empreintes 170 sont réalisées en protubérance dans la paroi intérieure de la bague tournante 160. Elles permettent le montage ou le démontage par une opération de vissage ou de dévissage, et par l'intermédiaire d'une clef de manoeuvre 180, de la bague tournante 160 sur le manchon 140.

Des encoches 149 sont réalisées dans l'extrémité libre de la paroi cylindrique 142 du manchon 140. D'autres encoches 169 sont réalisées dans la paroi intérieure de la bague tournante 160, entre les empreintes 170. Ces encoches 149, 169 permettent, en coopération avec le cabochon 200, de bloquer en rotation la bague tournante 160 sur le manchon 140 pour éviter un dévissage fortuit de ladite bague tournante 160 pendant le roulage du véhicule et de verrouiller l'enjoliveur O sur la jante J comme cela est précisé ci-après.

Pour visser ou dévisser la bague tournante 160 sur le manchon 140, on utilise de préférence une clef de manoeuvre 180, comme celle qui est représentée à cette Fig. 2. Cette clef de manoeuvre 180 comprend un moyen de prise 182 associé à un disque 184 muni de doigts 186 agencés pour coopérer avec les empreintes 170 de la bague tournante 160 pour son entraînement en rotation.

Le cabochon 200, qui est constitué à cette Fig. 2 d'un disque 202 pourvu de languettes 204 aptes à coopérer avec les parois arrière des empreintes 170 de la bague tournante 160, permet de fermer l'ouverture centrale traversant ladite bague tournante.

On remarquera sur la jante J la présence de crantages 03 réalisés dans une bordure périphérique 04 ceinturant le logement central O1 du côté extérieur de ladite jante J et qui sont aptes à coopérer avec d'autres crantages 206 présents sur une couronne 208 située à la périphérie du disque 202 du cabochon 200 sur son côté intérieur de manière à bloquer en rotation ledit cabochon à l'issue de son montage sur l'enjoliveur O. Des tenons 210 sont disposés sur le disque 202 du cabochon 200 sur son côté intérieur de manière à coopérer avec les encoches 149 et 169 mises en regard les unes avec les autres, à la fin du vissage de la bague tournante 160 sur le manchon 140. A l'issue du montage de l'enjoliveur O sur le manchon 140 et pendant la pose du cabochon 200, les tenons 210 sont placés, dans les encoches 149 et 169 si bien que, d'une part, la bague tournante 160 ne peut plus tourner sur le manchon 140 et donc se dévisser ce qui conduirait à la perte de l'enjoliveur O et, d'autre part, l'enjoliveur O outre son plaquage sur la jante J est bloqué en rotation sur celle-ci par l'intermédiaire du cabochon 200 ce qui lui permet de demeurer convenablement orienté sur ladite jante.

Des fentes 212 sont réalisées au travers du disque 202 du cabochon 200 en étant disposées de manière à ce que les doigts 186 de la clef de manoeuvre 180 puissent pénétrer au travers afin de déformer les languettes 204 pour faciliter le retrait du cabochon 200 de dessus la bague tournante 160.

Un renfoncement 214 apparaît dans le disque 202 pour réceptionner une plaquette portant un marquage tel qu'un logo, non représentée, fixée, par exemple par clippage.

Le montage de l'enjoliveur O sur la jante J est réalisé de la manière suivante : on place la jante J sur le moyeu M, orientée de manière à ce qu'elle soit en correspondance avec l'emplacement des orifices de montage de ses goujons G. On place ensuite l'anneau de retenue 120 muni de son manchon 140 sur la jante J et l'on visse les goujons G de manière à solidariser sur le moyeu M, la jante J, l'anneau de retenue 120 et le manchon 140. Il est utile à ce stade de préciser que le montage du manchon 140 dans l'anneau de retenue 120 est réalisé par une simple opération d'insertion du manchon 140 dans le passage central cylindrique 121 de l'anneau de retenue 120.

La bague tournante 160 est enfilée au travers du logement central O1 de l'enjoliveur O, puis on visse celle-ci sur le manchon 140 en utilisant la clef 180 de manière à placer en butée l'enjoliveur O sur la jante J dans une position où il est convenablement orienté, c'est-à-dire en plaçant un décrochement dont il est pourvu à sa périphérie en regard avec la valve de gonflage du pneu monté sur ladite jante. On visse la bague tournante 160 de manière à placer en concordances ses encoches 169 avec celles 149 du manchon 140. On place ensuite le cabochon 200 sur la bague tournante 160 pour l'obturer. L'enjoliveur O est alors plaqué contre la jante J par l'intermédiaire de la bague tournante 160 vissée sur le manchon 140 en étant bloquée en rotation par l'intermédiaire du cabochon 200 clippé sur les empreintes 170 de ladite bague tournante et dont les tenons 210 sont logés dans les encoches 149 et 169.

Le dispositif de fixation d'un enjoliveur sur une jante de l'invention permet de standardiser une offre d'enjoliveurs puisqu'un seul anneau de retenue et une seule bague tournante sont nécessaires pour toute la gamme de jantes à quatre ou cinq goujons, et que environs trois types de hauteurs de manchons sont requis pour gérer les disparités de profondeur des jantes.

On peut personnaliser l'enjoliveur en plaçant par un marquage spécifique sur le cabochon.

Le manchon ainsi que la bague tournante sont avantageusement fabriqués par moulage de matière plastique pour en réduire leurs coûts dans une fabrication en grande série.

Dans une variante de réalisation, non représentée, la paroi cylindrique du manchon est pourvue intérieurement d'un taraudage qui remplace le filetage alors que la bague de la bague tournante est pourvue extérieurement d'un filetage qui remplace le taraudage. La bague tournante est ainsi assemblée au manchon par une opération de vissage dans celui-ci. Dans ce mode de réalisation, l'arrêtoir décrit ci avant sur la bague de la bague tournante disparaît.

## Revendications

1. Dispositif de fixation (100) d'un enjoliveur (O) sur une jante (J) d'un véhicule automobile, le dispositif de fixation (100) comprenant un anneau de retenue (120) destiné à être solidarisé sur la jante (J) par des goujons (G) de fixation de ladite jante sur un moyeu (M) du véhicule automobile, **caractérisé en ce qu'**il comporte en outre un manchon (140) prévu pour être fixé sur l'anneau de retenue (120), ainsi qu'une bague tournante (160) destinée à être montée dans un logement central (O1) dont est pourvu l'enjoliveur (O), de manière à ce que la fixation de l'enjoliveur (O) sur ladite jante (J) puisse être réalisée par vissage de la bague tournante (160) autour ou dans ledit manchon (140).

2. Dispositif de fixation (100) selon la revendication 1, **caractérisé en ce que** le manchon (140) est pourvu d'un filetage (144) et la bague tournante (160) est pourvue d'un taraudage (164) prévus pour coopérer ensemble.

3. Dispositif de fixation (100) selon la revendication 2, **caractérisé en ce que** l'anneau de retenue (120) est constitué d'une couronne (122) délimitant un passage central cylindrique (121), et **en ce que** le manchon (140) est constitué d'une paroi cylindrique (142) prévue pour être montée dans le passage central cylindrique (121), ladite paroi cylindrique (142) étant pourvue à une extrémité du filetage (144) et étant pourvue à son autre extrémité d'une collerette (146) destinée à être mise en butée sur ledit anneau (120) en étant placée entre la jante (J) et ledit anneau.

4. Dispositif de fixation (100) selon la revendication 3, **caractérisé en ce que** l'anneau de retenue (120) et le manchon (140) sont pourvus d'un moyen de blocage en rotation (148) permettant d'interdire tout mouvement de rotation du manchon (140) dans l'anneau de retenue (120) à l'issue de leur assemblage.

5. Dispositif de fixation (100) selon la revendication 4, **caractérisé en ce que** le moyen de blocage en rotation (148) est constitué d'au moins un tenon coopérant respectivement avec au moins une rainure.

6. Dispositif de fixation (100) selon la revendication 3, 4 ou 5, **caractérisé en ce que** l'anneau de retenue (120) et le manchon (140) sont pourvus d'un moyen de blocage en translation (152) permettant de bloquer tout mouvement en translation du manchon (140) dans l'anneau de retenue (120), à l'issue de leur assemblage.

7. Dispositif de fixation (100) selon la revendication 6, **caractérisé en ce que** le moyen de blocage en translation (152) est constitué d'au moins un cran agencé de manière élastique dans la paroi cylindrique (142) du manchon (140) en étant apte à coopérer avec la face externe de la couronne (122) de l'anneau de retenue (120).

8. Dispositif de fixation (100) selon la revendication 3 à 7, **caractérisé en ce que** la couronne (122) est pourvue d'orifices (124) permettant le montage des goujons (G).

9. Dispositif de fixation (100) selon la revendication 8, **caractérisé en ce que** les orifices (124) sont constitués de quatre trous et deux rainures oblongues aménagés de manière à permettre le montage de l'anneau de retenue (120) sur des moyeux (M) de type à quatre goujons (G) ou de type à cinq goujons (G).

10. Dispositif de fixation (100) selon l'une quelconque des revendications 3 à 9, **caractérisé en ce que** des doigts élastiques (150) sont prévus au travers de la couronne (122).

11. Dispositif de fixation (100) selon l'une quelconque des revendications 2 à 10, **caractérisé en ce que** la bague tournante (160) est constituée d'une bague (162) prévue pour être montée libre à rotation dans le logement central (O1) et dont une extrémité comporte un épaulement (166) destiné à former une butée sur la paroi extérieure de l'enjoliveur (O), la bague (162) comportant intérieurement le taraudage (164) adapté à coopérer avec le filetage (144) du manchon (140).

12. Dispositif de fixation (100) selon la revendication 11, **caractérisé en ce qu'**il comprend une clef (180) de manoeuvre de la bague tournante (160) ainsi qu'un cabochon (200) d'obturation, la clef (180) de manoeuvre est pourvue de doigts (186) et le cabochon (200) d'obturation est pourvu de languettes (204), des empreintes (170) étant réalisées en protubérance dans la paroi intérieure de la bague tournante (160) pour coopérer avec les doigts (186) de la clef (180) de manoeuvre afin de pouvoir être entraînée en rotation par elle et dont les parois arrière sont adaptées à coopérer avec les languettes du cabochon (200) pour le verrouiller.

13. Dispositif de fixation (100) selon la revendication 11 ou 12, **caractérisé en ce que** le manchon (140) et la bague tournante (160) sont pourvus respectivement d'encoches (149 et 169), l'enjoliveur (O) étant pourvu de crantages (03) réalisés dans une bordure périphérique (04) ceinturant le logement central (O1) de l'enjoliveur (O), le cabochon (200) étant pourvu, d'une part, de crantages (206) aptes à coopérer avec ceux de l'enjoliveur (O) et, d'autre part, de tenons (210) aptes être placés dans les encoches (149 et 169) pour bloquer en rotation l'enjoliveur (O) sur la jante (J) à l'issue du verrouillage du cabochon (200).

14. Dispositif de fixation (100) selon la revendication 11, 12 ou 13, **caractérisé en ce que** des fentes (212) sont réalisées au travers du cabochon (200) en étant disposées de manière à ce que les doigts (186) de la clef de manoeuvre (180) puissent pénétrer au travers afin de déformer les languettes (204) pour faciliter le retrait du cabochon (200) de dessus la bague tournante (160).
